**Europäisches Patentamt**

**European Patent Office**

**Office européen des brevets**

(11) Veröffentlichungsnummer: **0 509 207 A1**

# EUROPÄISCHE PATENTANMELDUNG

(21) Anmeldenummer: **92102400.6**

(22) Anmeldetag: **13.02.92**

(51) Int. Cl.⁵: **F01N 3/28**, B01J 35/04

(30) Priorität: **16.04.91 DE 4112354**

(43) Veröffentlichungstag der Anmeldung:
**21.10.92 Patentblatt 92/43**

(84) Benannte Vertragsstaaten:
**DE ES FR GB IT SE**

(71) Anmelder: **Behr GmbH & Co.**
**Mauserstrasse 3**
**W-7000 Stuttgart 30(DE)**

(72) Erfinder: **Humpolik, Bohumil**
**Odenheimer Strasse 19**
**W-7140 Ludwigsburg(DE)**
Erfinder: **Bayer, Jürgen**
**Albstrasse 23**
**W-7300 Esslingen(DE)**

(54) **Vorrichtung zum katalytischen Entgiften von Abgasen.**

(57) Es sind Metallkatalysatoren bekannt, die mittels Laser- oder Elektronenstrahlen mit einem Mantelgehäuse verschweißt sind. Nachteilig ist dabei, daß die Verbindung Metallkatalysator-Mantelgehäuse eine zu geringe Festigkeit aufweist.

Es wird vorgeschlagen, daß ein Metallträgerkörper (1) aus mehreren übereinander gestapelten und verschlungenen Lagen gewellter oder gewellter und glatter Bleche (3,4) besteht, die glatte, einander überlappende Endabschnitte (5,5') aufweisen. Die Endabschnitte (5,5') bilden am Umfang des Metallträgerkörpers (1) eine äußere Schicht (8), die mit dem Mantel (2) verbunden, vorzugsweise verschweißt ist.

Verwendung für Abgaskatalysatoren von Verbrennungsmotoren

Fig. 1

Die Erfindung betrifft eine Vorrichtung zum katalytischen Entgiften von Abgasen, insbesondere für Kfz-Motoren, nach dem Oberbegriff des Patentanspruchs 1.

Es ist aus der DE-A1 27 20 322 bekannt, die Metallfolien eines Metallkatalysators mit Hilfe von Elektronenstrahlen zu verschweißen. Dabei werden die einzelnen Blechlagen untereinander derartig verschweißt, daß der Metallkatalysator zu einem in sich festen Einsatz verbunden ist. Dieser Einsatz wird in einem Gehäuse befestigt, z.B. ebenfalls durch Elektronenstrahlschweißen.

Aus der DE-A1 27 27 967 (Zusatz zu DE-A1 27 20 322) ist es bekannt, den Metallkatalysator mittels Laserschweißen herzustellen.

Aus der EP-A1 0 245 737 ist es bekannt, Wabenkörper aus gewellten und glatten Blechen so auszubilden, daß die gewellten Bleche an ihren Enden gerade Abschnitte aufweisen, welche etwa mittig zwischen den angrenzenden glatten Blechen verlaufen. Die Enden der gewellten Bleche dürfen dabei die Enden der glatten Bleche nicht berühren, sie liegen jeweils einzeln an einem umgebenden Mantelrohr an, mit dem sie fügetechnisch verbunden werden.

Nachteilig ist bei den vorgenannten Konstruktionen, daß sehr dünne Metallfolien (z.B. 0,05 mm) mit einem um ein vielfaches dickeren Gehäuse verbunden, insbesondere verschweißt werden. Um eine haltbare Verbindung zwischen dem Metallkatalysator und dem Gehäuse zu erreichen, muß die Schweißtiefe eines Elektronen- bzw. Laserstrahls sehr genau eingestellt werden, da sonst die Schweißverbindung zwischen Gehäuse und Metallkatalysator instabil wird oder die äußere Folienlage des Metallkatalysators zerschnitten wird.

Der Erfindung liegt daher die Aufgabe zugrunde, einen Metallträgerkörper der eingangs genannten Art so auszubilden, daß ein Wabenkörper entsteht, der einfach und dauerhaft in einem Mantel axial fixiert, insbesondere eingeschweißt werden kann.

Zur Lösung dieser Aufgabe wird ein Metallträgerkörper mit den kennzeichnenden Merkmalen des Anspruchs 1 vorgeschlagen. Weitere vorteilhafte Ausgestaltungen eines solchen Metallträgerkörpers sind in den Unteransprüchen aufgezeigt.

Die vorgeschlagene Ausgestaltung erlaubt eine sichere Verbindung des Metallträgerkörpers mit dem Mantel. Die äußere Schicht des Metallträgerkörpers, die aus einander überlappenden, glatten Endabschnitten der gewellten oder gewellten und glatten Bleche gebildet ist, bewirkt eine Materialanhäufung am Umfang des Metallträgerkörpers, die ein einfaches Verschweißen des Metallträgerkörpers mit dem Mantel erlaubt. Die glatten Endabschnitte der Bleche sind in ihrer Länge etwa gleich. Durch ihre gleichförmige Verteilung auf dem Umfang treten sie in gleichmäßigem Abstand voneinander in die äußere Schicht des Metallträgerkörpers ein, verlaufen dort radial nach außen, um schließlich am umgebenden Mantel zu enden. Somit ist sichergestellt, daß jedes Blech direkt mit dem Mantel verbunden wird. Die Dicke der äußeren Schicht ist so gewählt, daß sie größer ist als die Wandstärke des umgebenden Mantels. Die Schweißtiefe für ein Durchschweißen nach Anspruch 4 durch den Mantel in die äußere Schicht des Metallträgerkörpers wird so eingestellt, daß die Schweißung etwa 2/3 der Dicke der äußeren Schicht radial nach innen durchdringt. Bei schwankender Schweißtiefe verbleibt so ein ausreichender Ioleranzbereich, so daß die äußere Schicht des Metallträgerkörpers bei geringerer Schweißtiefe mit dem Mantel verschweißt ist, bei größerer Schweißtiefe aber nicht durchschnitten wird. Das Schweißverfahren ist dabei nicht auf Laser- oder Elektronenstrahlschweißen beschränkt, es sind auch andere Schweißverfahren, z.B. WIG-Schweißen, einsetzbar, jedoch ist durch Laserschweißen nach Anspruch 3 eine besonders vorteilhafte, insbesondere schnelle Fertigungsmöglichkeit gegeben.

Die Ausgestaltung nach Anspruch 5 beschreibt das stirnseitige Verschweißen des Metallträgerkörpers mit dem Mantel. Auch hierbei ist die große Materialstärke der äußeren Schicht besonders vorteilhaft. Es ist beispielsweise möglich, den Metallträgerkörper mit dem Mantel an deren stirnseitigen Berührungslinien bei überstehendem Mantel durch eine Kehlnaht, bei bündig abschließendem Mantel durch eine V-Naht zu verschweißen. Als Schweißverfahren können dabei alle gängigen Verfahren zum Einsatz kommen.

Die Ausführung nach Anspruch 6 beschreibt eine weitere vorteilhafte Ausgestaltung. Hierbei ist die äußere Schicht des Metallträgerkörpers kragenförmig nach außen abgeschält, wobei sich ein nach außen überstehender Rand ergibt, der mit der Stirnseite des Mantels abschließt und mit diesem durch Schweißen, z.B. Punkt- oder WIG-Schweißen, verbunden wird. Gleichzeitig kann von der dem Mantel gegenüberliegenden Seite ein Rohr, ein Konus o.ä. gemeinsam mit dem kragenförmigen Rand und dem Mantel verschweißt werden.

Eine weitere Lösung der Aufgabe stellt eine Ausgestaltung der Vorrichtung zur Abgasreinigung nach Anspruch 7 dar. Der Metallträgerkörper besitzt ebenfalls eine äußere Schicht aus einander überlappenden, glatten Endabschnitten der gewellten oder gewellten und glatten Bleche. Er wird in einem Mantel durch mechanische Halterungen befestigt. Diese Halterungen greifen an der äußeren Schicht stirnseitig an, so daß die Haltekräfte, die zur Fixierung des Metallträgerkörpers im Mantel aufgebracht werden müssen, auf alle Blechlagen der äußeren seren Schicht übertragen werden.

Da sich die glatten Endabschnitte am Umfang des Metallträgerkörpers ohne nennenswerten Spalt überlappen, ist die aus den Haltekräften resultierende Flächenpressung gegenüber herkömmlich hergestellten Vorrichtungen zur Abgasreinigung deutlich reduziert.

Die mechanischen Halterungen können unterschiedlich ausgestaltet werden. So kann ein Stützring zur Abstützung des Metallträgerkörpers in den Mantel eingesetzt und in diesen eingeschweißt, eingelötet oder eingepreßt werden. Ebenso kann die mechanische Halterung durch ein Einziehen des Mantels oder ein Ausprägen von Haltelaschen aus dem Mantel vor den Stirnseiten des Metallträgerkörpers erreicht werden. Eine Kombination dieser und weiterer Möglichkeiten ist je nach Einsatzbedingungen möglich. Besonders vorteilhaft ist die Ausgestaltung der mechanischen Halterungen in Form von Ein- bzw. Auslaufkonen, die überlicherweise vor bzw. hinter einer Vorrichtung zur Abgasreinigung montiert werden. Hierbei werden die Konen so ausgestaltet, daß ihr Außendurchmesser dem Innendurchmesser des Mantels der Vorrichtung zur Abgasreinigung entspricht. Sie werden in den Mantel eingefügt und mit diesem verbunden, vorzugsweise verschweißt, wobei die Stirnseiten der Konen an den Stirnseiten des Metallträgerkörpers im Bereich der äußeren Schicht anliegen.

Ein vorteilhaftes Verfahren zur Herstellung des Metallträgerkörpers wird nach Anspruch 8 erreicht. Hierbei werden beschichtete gewellte oder gewellte und glatte Bleche verwendet, deren glatte Endabschnitte in einem Bereich A, der später mit dem Mantel verschweißt werden soll, unbeschichtet sind. Die Beschichtung, z.B. ein Wash-Coat, wird vor der Weiterverarbeitung zu der Vorrichtung zur Abgasreinigung auf dem Halbzeug aufgebracht. Hierbei wird der glatte Endabschnitt der Bleche entweder abgeschirmt, so daß hier ein unbeschichteter Bereich A verbleibt, oder es wird das gesamte Blech beschichtet, und der Bereich A wird nachträglich durch ein chemisches oder mechanisches Verfahren von der Beschichtung befreit. Eine mechanische Entfernung der Beschichtung könnte beispielsweise durch ein Bürsten der Endabschnitte erfolgen.

Besonders vorteilhaft ist bei diesem Verfahren, daß der fertige Metallträgerkörper nicht nachträglich beschichtet werden muß, sondern bereits aus beschichteten Blechen zusammengebaut ist. Hieraus ergibt sich eine gleichmäßige Verteilung der Beschichtung auf den gewellten und glatten Blechen, insbesondere werden Materialanhäufungen, die sich bei nachträglichem Beschichten in den Winkeln zwischen den Berührungslinien der Wellen der gewellten Bleche mit den glatten Blechen bilden, vermieden. Daraus folgt, daß in der Vorrichtung zur Abgasreinigung die wirksame Oberfläche größer und der Druckabfall kleiner sind.

Die Erfingung gemäß der Ansprüche 1 bis 8 kann vorteilhaft für solche Trägerkörper angewandt werden, bei welchen mehrere Lagen von innen nach außen verlaufen, also z.B. gemäß der DE-C1 40 16 276 oder der EP-B1 0 245 736. Die Erfindung ist in der Zeichnung anhand von Ausführungsbeispielen dargestellt. Es zeigen:

| | |
|---|---|
| **Fig. 1** | Ausschnitt aus Fig. 2 mit glatten Endabschnitten am Mantel, |
| **Fig. 2** | Metallträgerkörper im Mantel (Draufsicht), |
| **Fig. 3** | Metallträgerkörper im Mantel mit einer zick-zack-förmig umlaufenden Schweißnaht, |
| **Fig. 4** | Metallträgerkörper im Mantel mit zwei geradlinig umlaufenden Schweißnähten, |
| **Fig. 5** | Schnitt durch Metallträgerkörper und Mantel mit Durchschweißung in Mantel und äußerer Schicht, |
| **Fig. 6** | Schnitt durch Metallträgerkörper und Mantel mit Kehlnaht an Mantel und äußerer Schicht, |
| **Fig. 7** | Schnitt durch Metallträgerkörper und Mantel mit stirnseitiger Schweißnaht an Mantel und äußerer Schicht, |
| **Fig. 8** | Schnitt durch Metallträgerkörper und Mantel mit kragenförmigem Rand und um laufender Schweißnaht an Mantel und kragenförmigem Rand, |
| **Fig. 9** | Schnitt durch Metallträgerkörper und Mantel mit mechanischer Halterung, |
| **Fig. 10** | Ausschnitt aus Fig. 2 mit beschichteten Blechen und unbeschichteten glatten Endabschnitten am Mantel. |

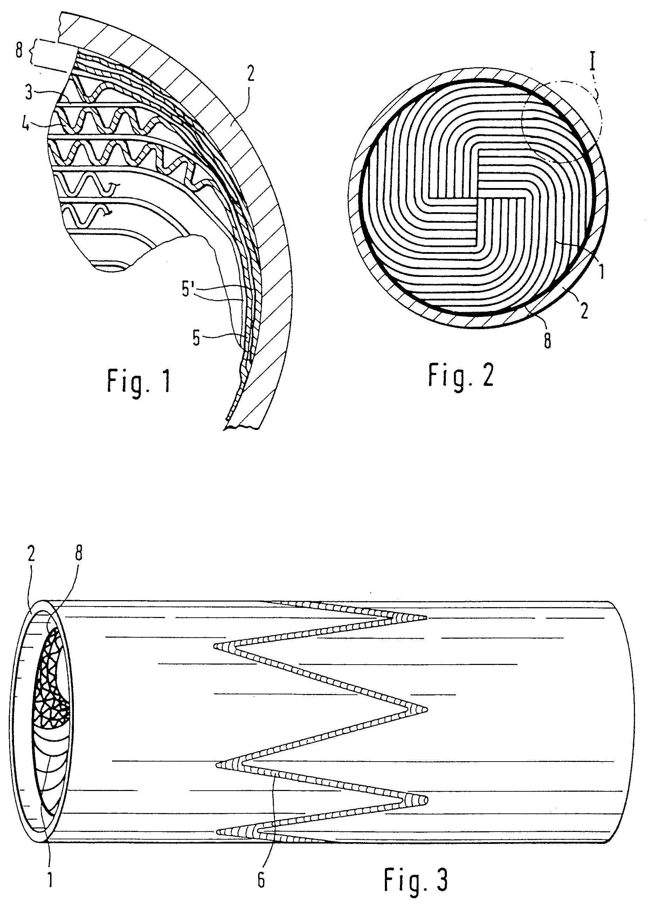

Fig. 1 stellt einen Ausschnitt aus einer Vorrichtung nach Anspruch 1 dar. Hierbei sind die gewellten Bleche 4 mit glatten Endabschnitten 5 versehen. Diese Endabschnitte 5 sind mit glatten Endabschnitten 5' von glatten oder ebenfalls mit Wellungen, z.B. Mikrowellungen, versehenen Blechen 3 im Wechsel zu einer äußeren Schicht 8 eines Metallträgerkörpers 1 aufgeschichtet. Die Endabschnitte 5, 5' sind etwa gleich lang, so daß, bedingt durch ein gleichmäßig über den Umfang des Metallträgerkörpers 1 verteiltes Einlaufen der glatten Endabschnitte 5, 5' in die äußere Schicht 8, jeder Endabschnitt 5, 5' mit einem umgebenden Mantel 2 in Berührung kommt und mit diesem verschweißt werden kann. Eine Verlängerung der glatten Endabschnitte 5, 5' bewirkt eine Zunahme der Dicke der äußeren Schicht 8, da dadurch die Anzahl der glatten Endabschnitte 5, 5', die gleichzeitig an einem Punkt des Umfangs des Metallträgerkörpers 1 zur äußeren Schicht 8 aufgeschichtet sind, zunimmt.

Die glatten Endabschnitte 5, 5' schmiegen sich sehr gut an den umgebenden Mantel 2 an, so daß an den Stellen, an denen einer der Endabschnitte 5, 5' endet und der darunterliegende Endabschnitt 5', 5 mit dem Mantel 2 in Berührung kommt, keine größeren Hohlräume verbleiben. Durch die Eigenspannung der Bleche 3, 4 wird die äußere Schicht 8 an den umhüllenden Mantel 2 gepreßt, vor dem Verschweißen sind daher keine zusätzlichen Sicherungsmaßnahmen zur Halterung des Metallträgerkörpers 1 im Mantel 2 erforderlich.

In Fig. 2 wird eine bevorzugte Ausführungsform für eine Vorrichtung zur Abgasreinigung dargestellt, die einen im kennzeichnenden Teil des Anspruchs 1 beschriebenen und in der Fig. 1 vergrößert gezeichneten Metallträgerkörper 1 enthält. Hierbei werden vier Stapel von aufeinandergestapelten Blechen 3, 4 mit glatten Endabschnitten 5 kreuzförmig aneinandergelegt und gemeinsam zu einem runden Metallträgerkörper 1 gleichsinnig verschlungen. Dabei bildet sich die äußere Schicht 8 durch das Aufeinanderschichten der glatten Endabschnitte 5, 5'. Der Metallträgerkörper 1 ist in den Mantel 2 eingesetzt und mit diesem verschweißt. Die Federkraft der Bleche 3, 4 bewirkt, daß die Bleche 3, 4 des Metallträgerkörpers 1 untereinander nicht fügetechnisch verbunden sein müssen. In Fig. 3 ist eine Ausführungsvariante der Vorrichtung nach Anspruch 4 dargestellt. Hierbei ist der Metallträgerkörper 1 in einen rohrförmigen Mantel 2 eingesetzt. Die äußere Schicht 8 des Metallträgerkörpers 1 wird mit dem Mantel 2 durch den Mantel 2 hindurch verschweißt. Die Schweißnaht 6 verläuft zickzack-förmig über den Umfang des Mantels 2. Sie kann z.B. durch Laserschweißen erzeugt sein. Hierzu wird beispielsweise ein rohrförmiger Mantel 2, der mit dem Metallträgerkörper 1 bestückt ist, um seine Längsachse in Rotation versetzt und in einen Laserstrahl, der eine oszillierende Bewegung in Richtung der Längsachse des Mantels 2 ausführt, eingebracht. Die Energie des Laserstrahls führt zu einem Durchschweißen des Mantels 2 in die äußere Schicht 8 hinein.

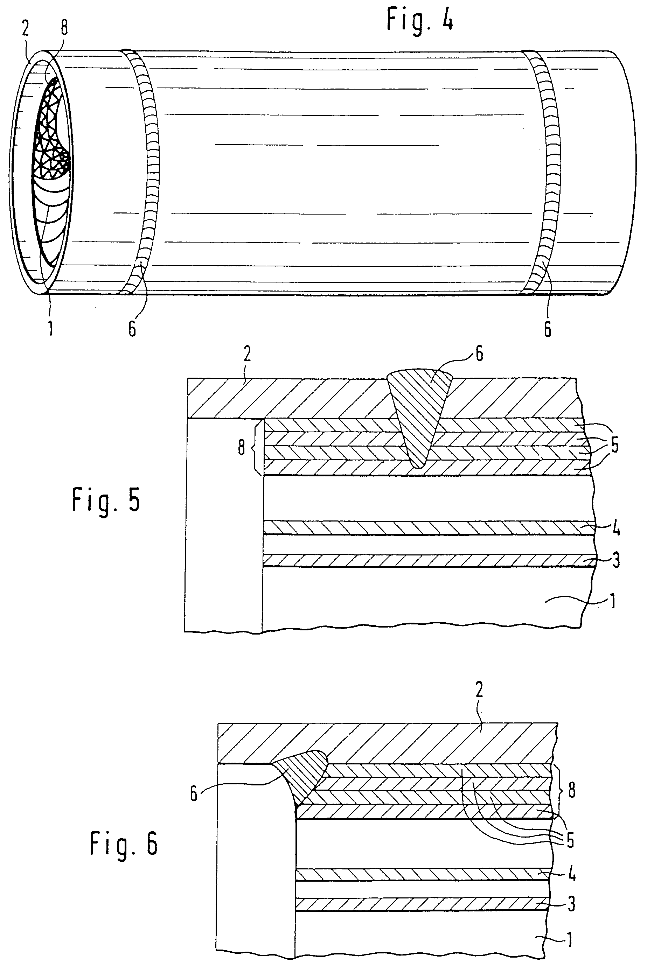

Die Fig. 4 stellt eine weitere Variante der Vorrichtung nach Anspruch 4 dar. Hier ist der Metallträgerkörper 1 mit dem Mantel 2 durch zwei geradlinig auf dem Umfang umlaufende Schweißnähte 6 verbunden. Die Schweißnähte 6 sind durch WIG-Schweißen hergestellt, wobei die Vorrichtung beispielsweise in Rotation um ihre Längsachse versetzt und mit zwei WIG-Schweißelektroden in Kontakt gebracht wird.

In Fig. 5 ist ein Schnitt durch den Mantel 2, den Metallträgerkörper 1 mit seiner äußeren Schicht 8 und eine Schweißnaht 6 dargestellt. Die Schweißnaht 6 ist durch Durchschweißen hergestellt. Sie verläuft durch den Mantel 2 bis in die äußere Schicht 8 und fixiert die glatten Enden 5, 5' der Bleche 3, 4 an dem Mantel 2, wobei immer mindestens 2 glatte Endabschnitte 5, 5' mit dem Mantel 2 verschweißt sind.

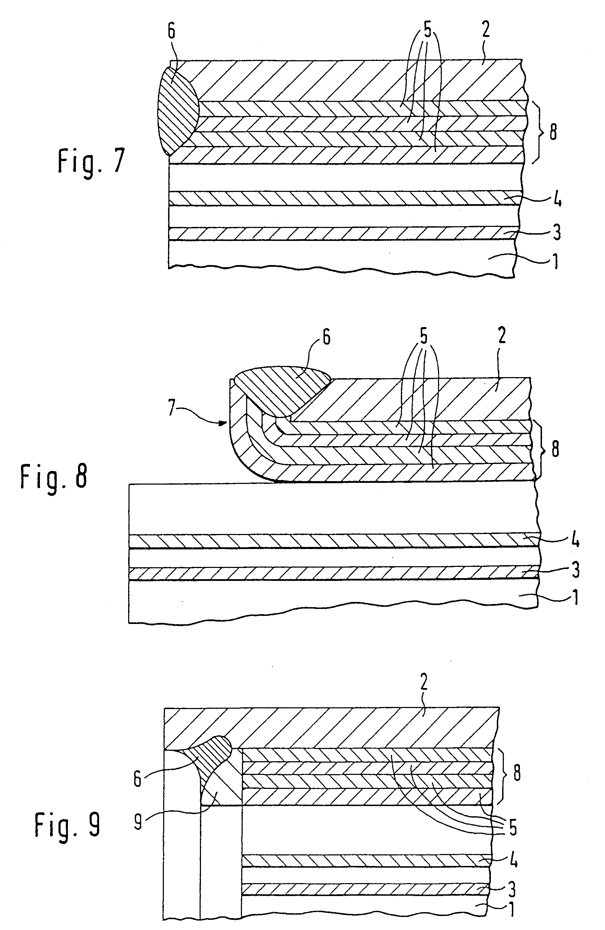

Die Fig. 6 stellt einen Schnitt durch eine Vorrichtung nach Anspruch 5 dar. Der Mantel 2 steht über den Metallträgerkörper 1 über, so daß die Schweißnaht 6 als Kehlnaht in den Winkel gelegt werden kann, der sich an dem stirnseitigen Ende des Metallträgerkörpers 1 und der Innenwand des Mantels 2 ergibt. Die Schweißnaht 6 wird so ausgeführt, daß die äußere Schicht 8 des Metallträgerkörpers 1 mit dem Mantel 2 verschweißt wird. Die Schweißnaht 6 kann durch ein beliebiges Schweißverfahren erzeugt werden, z.B. durch Elektro- oder Laserschweißen.

Die Fig. 7 stellt ebenfalls einen Schnitt durch eine Vorrichtung nach Anspruch 5 dar. Hier schließen jedoch der Metallträgerkörper 1 und der Mantel 2 an ihren Stirnseiten bündig ab. Somit kann eine Schweißnaht 6 als U- oder V-Naht von der Stirnseite senkrecht gleichzeitig in den Mantel 2 und in die äußere Schicht 8 des Metallträgerkörpers 1 eingeschweißt werden. Auch hierbei ist das Schweißverfahren beliebig.

Die Breite der Schweißnaht 6, mit der eine Vorrichtung nach Anspruch 5 verschweißt wird, wird so gewählt, daß sie schmaler ist als die Dicke der äußeren Schicht 8 und des Mantels 2 zusammengenommen, wie in Fig. 6 und Fig. 7 dargestellt.

Fig. 8 stellt einen Schnitt durch eine Vorrichtung nach Anspruch 6 dar. Von dem Metallträgerkörper 1 ist die äußere Schicht 8 im stirnseitigen Bereich kragenförmig nach außen abgeschält und liegt nun am stirnseitigen Ende des Mantels 2 an. Die äußere Schicht 8 wird mit dem Mantel 2 verschweißt, wobei in die äußere Schicht 8 im Bereich des kragenförmigen Randes 7 stirnseitig und in den Mantel 2 umfangsseitig hineingeschweißt wird. Der kragenförmige Rand 7 wird durch ein geeignetes Werkzeug vom Metallträgerkörper losgeschnitten und gleichzeitig nach außen gebogen oder lediglich formgebend nach außen gebogen, insbesondere kann dieses Werkzeug die Elektrode eines Punktschweißgerätes sein und die Schweißnaht 6 während des Abschäl- oder Umformvorganges durch Punktschweißen erzeugt werden. Die Verbindung zwischen Metallträgerkörper 1 und Mantel 2 nach Anspruch 6 ist stoff- und formschlüssig.

In Fig. 9 ist ein Schnitt durch eine Vorrichtung zur Abgasreinigung nach Anspruch 7 dargestellt. Hierbei ist der Metallträgerkörper 1 in den Mantel 2 eingesetzt. Die glatten Endabschnitte 5 der glatten und gewellten Bleche 3, 4 bilden die äußere Schicht 8. In den Mantel 2 ist eine mechanischer Halterung 9 in Form eines Rohrabschnittes eingesetzt. Sie liegt an der Stirnseite des Metallträgerkörpers 1 im Bereich der äußeren Schicht 8 an und ist mit dem Mantel 2 durch eine stirnseitige Schweißnaht 6 verbunden. Der Metallträgerkörper 1 ist formschlüssig in axialer Richtung im Mantel 2 fixiert.

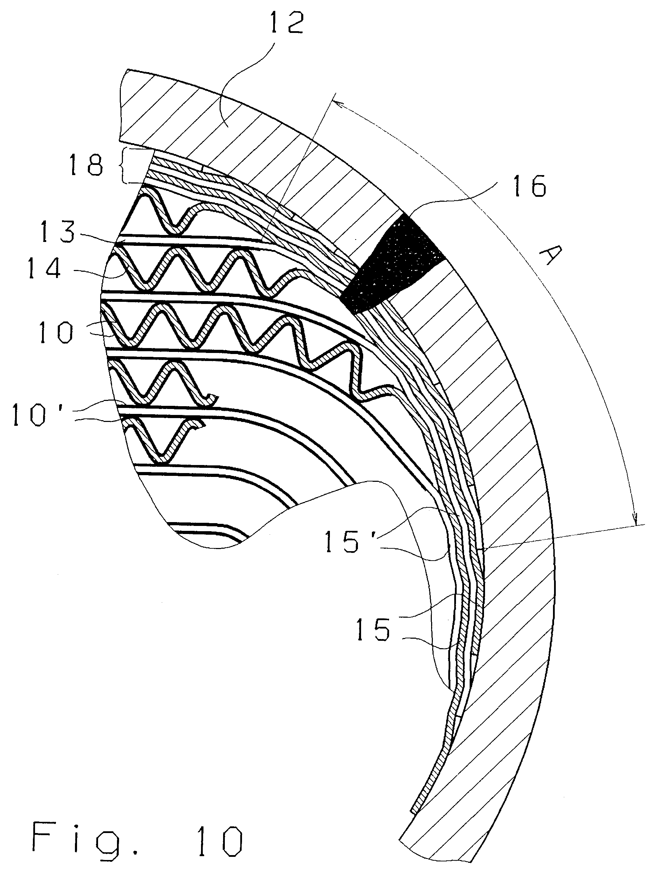

Fig. 10 stellt einen Ausschnitt aus einem Metallträgerkörper dar, der nach dem Verfahren gemäß Anspruch 8 hergestellt wurde. Hierbei sind die gewellten Bleche (14) und die glatten Bleche (13) mit einer Beschichtung, z.B. einem Wash-Coat (10, 10') versehen, der bereits vorher auf die einzelnen Bleche aufgebracht wurde. Die glatten Endabschnitte (15, 15') der Bleche (13, 14) sind in einem Bereich (A), der hier der Länge der glatten Endabschnitte (15, 15') entspricht, unbeschichtet, sie sind zu einer äußeren Schicht (18) aufgeschichtet, die am Mantel (12) anliegt. Der Mantel (12) und die äußere Schicht (18) sind durch eine Verschweißung (16) fügetechnisch verbunden, was nur möglich ist, wenn die Endabschnitte blank und unbeschichtet sind.

## Patentansprüche

1. Vorrichtung zum katalytischen Entgiften von Abgasen, vorzugsweise für Kfz-Motoren, mit einem Metallträgerkörper, bestehend aus mehreren Lagen gewellter oder glatter und gewellter Bleche, und einem Mantel, der den Metallträgerkörper umschließt und mit diesem schweißtechnisch verbunden ist, **dadurch gekennzeichnet**, daß die Bleche (3, 4) glatte Endabschnitte (5, 5') aufweisen, die, einander überlappend, als äußere Schicht (8) am Umfang des Metallträgerkörpers (1) angeordnet und mit dem Mantel (2) mit mindestens einer Schweißnaht (6) verbunden sind.

2. Vorrichtung nach Anspruch 1, **dadurch gekennzeichnet**, daß die äußere Schicht (8) zwischen 0,5 mm und 2 mm dick ist.

3. Vorrichtung nach Anspruch 1 oder 2, **dadurch gekennzeichnet**, daß die Schweißnaht (6) durch Laserschweißen erzeugt ist.

4. Vorrichtung nach einem der Ansprüche 1, 2 oder 3, **dadurch gekennzeichnet**, daß die äußere Schicht (8) des Metallträgerkörpers (1) durch den Mantel (2) hindurch mit diesem verschweißt ist.

5. Vorrichtung nach einem der Ansprüche 1, 2 oder 3, **dadurch gekennzeichnet**, daß die äußere Schicht (8) des Metallträgerkörpers (1) mit dem Mantel (2) stirnseitig verschweißt ist.

6. Vorrichtung nach einem der Ansprüche 1, 2 oder 3, **dadurch gekennzeichnet**, daß die äußere Schicht (8) von dem Metallträgerkörper (1) an den Stirnseiten kragenförmig abgeschält oder durch Umformung ausgestellt wird, und daß der kragenförmige Rand (7) mit dem Mantel (2) verschweißt ist.

7. Vorrichtung zum katalytischen Entgiften von Abgasen, vorzugsweise für Kfz-Motoren, mit einem Metallträgerkörper, bestehend aus mehreren Lagen gewellter oder glatter und gewellter Bleche und einem Mantel, der den Metallträgerkörper umschließt, **dadurch gekennzeichnet**, daß die Bleche (3, 4) glatte Endabschnitte (5, 5') aufweisen, die, einander überlappend, als äußere Schicht (8) am Umfang des Metallträgerkörpers (1) angeordnet sind, und daß der Metallträgerkörper (1) durch mechanische Halterungen (9), die stirnseitig an der äußeren Schicht (8) angreifen, im Mantel (2) formschlüssig befestigt ist.

8. Verfahren zur Herstellung eines Metallträgerkörpers nach einem der vorhergehenden Ansprüche 1 bis 7, **dadurch gekennzeichnet**, daß

   a) die einzelnen Bleche (3, 4; 13, 14), mit Ausnahme der Bereiche (A) der glatten Endabschnitte (5, 5'; 15, 15'), zunächst mit Wash-Coat (10, 10') beschichtet sind,

   b) die Bleche (3, 4; 13, 14') anschließend verschlungen und in den Mantel (2; 12) eingesetzt werden und

   c) die Bleche (3, 4; 13, 14') im unbeschichteten Bereich (A) der glatten Endabschnitte (5, 5'; 15, 15') mit dem Mantel (2; 12) verschweißt werden.

Fig. 1

Fig. 2

Fig. 3

Fig. 4

Fig. 5

Fig. 6

Fig. 7

Fig. 8

Fig. 9

Fig. 10

Europäisches
Patentamt

**EUROPÄISCHER RECHERCHENBERICHT**

Nummer der Anmeldung

EP    92 10 2400

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | EP-A-0 245 737 (INTERATOM)<br>* Spalte 6, Zeile 19 - Zeile 56; Abbildungen 4,5,10 *<br>--- | 1 | F01N3/28<br>B01J35/04 |
| A | DE-C-3 622 115 (DAIMLER-BENZ AG)<br>* Spalte 3, Zeile 22 - Zeile 44; Abbildung 2 *<br>--- | 1 | |
| A | PATENT ABSTRACTS OF JAPAN<br>vol. 15, no. 43 (C-801)31. Januar 1991<br>& JP-A-2 277 552 ( TOYOTA ) 14. November 1990<br>--- | | |
| A | PATENT ABSTRACTS OF JAPAN<br>vol. 15, no. 211 (C-836)29. Mai 1991<br>& JP-A-3 060 740 ( TOYOTA ) 15. März 1991<br><br>----- | | |
| | | | **RECHERCHIERTE SACHGEBIETE (Int. Cl.5 )**<br><br>F01N<br>B01J |

Der vorliegende Recherchenbericht wurde für alle Patentansprüche erstellt

| Recherchenort | Abschlußdatum der Recherche | Prüfer |
|---|---|---|
| DEN HAAG | 17 JULI 1992 | FRIDEN C.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................................................
& : Mitglied der gleichen Patentfamilie, übereinstimmendes
    Dokument

EPO FORM 1503 03.82 (P0403)